# EUROPEAN PATENT APPLICATION

(11) **EP 4 756 627 A1**
(43) Date of publication of application: **10.06.2026**
(21) Application number: 25219038.4
(22) Date of filing: 27.11.2025
(51) Int. Cl.: G06F 11/34, G06N 3/044

(54) **CUSTOMIZED PLATFORM FOR EVERY SINGLE PERSON IN DISTRIBUTION**

(30) Priority: 04.12.2024 US 202418968017
(71) Applicant: Ingram Micro Inc., Irvine, CA 92612 (US)
(72) Inventor: SAHOO, Sanjib, Naperville, IL, 60564 (US)
(74) Representative: Patrade A/S

(57) **Abstract**

Systems and methods provide for a customized platform for every single persona in distribution. A server, coupled to a processor, is configured to execute instructions to collect initial user data through a registration process using a Registration Module, analyze the collected data to identify the user's role using a Role Identification Engine, monitor user interactions using an Interaction Tracker, and aggregate user preferences using a Preference Aggregator. The system can generate a personalized user interface through a Single Pane of Glass User Interface (SPoG UI), dynamically updates content using a Dynamic Content Generator, employs AI techniques via an AI Learner to continuously improve personalization, provides personalized recommendations through a Recommendation System, monitors the effectiveness of the processes using a Performance Monitor, and collects and integrates user feedback with a Feedback Integrator. The system also incorporates data ingestion, cleaning, and transformation modules for enhanced analytics and storage optimization.

## Description

### BACKGROUND

In conventional IT distribution platforms, users from various roles such as MSP managers, vendors, resellers, and end customers often face a multitude of challenges. These platforms typically employ static or semi-static interfaces that do not adequately cater to the specific needs and preferences of different user personas. This lack of customization leads to inefficiencies, as users are presented with irrelevant information, tools, and features that do not align with their specific roles.

Traditional systems rely heavily on manual configuration and generic content delivery, resulting in a suboptimal user experience. For instance, MSP managers might need to sift through interfaces cluttered with tools configured to vendors or sales representatives, leading to wasted time and reduced productivity. Similarly, vendors may find it challenging to access the specific data and tools they need to manage their products and interact with resellers efficiently.

Moreover, conventional platforms lack the capability to dynamically adjust to changes in user behavior and preferences. The static nature of these systems means that any updates to the interface or content delivery often require significant manual intervention and time, resulting in outdated information being displayed to users. This can hinder decision-making processes, as users are unable to access the most current and relevant data.

The absence of advanced AI and machine learning techniques in conventional platforms further exacerbates these issues. Without the ability to learn from user interactions and adapt accordingly, traditional systems fail to provide personalized recommendations and content that align with the evolving needs of the users. As a result, users experience a generic and static interface that does not cater to their individual requirements, leading to dissatisfaction and reduced engagement.

In summary, conventional IT distribution platforms are plagued by static interfaces, lack of role-specific customization, manual content updates, and the absence of dynamic learning and adaptation. These limitations result in inefficient workflows, outdated information, and a subpar user experience, ultimately affecting the overall effectiveness and productivity of users across different roles within the IT distribution network.

### BRIEF SUMMARY OF THE INVENTION

Embodiments described herein provide a customized platform for every single persona in distribution, addressing the need for personalized user experiences in IT distribution networks. The platform begins by collecting initial user data through a registration process using a Registration Module, and analyzing this data to identify the user's role using a Role Identification Engine. User interactions are monitored through an Interaction Tracker, and preferences are aggregated by a Preference Aggregator to generate detailed user personas. A Single Pane of Glass User Interface (SPoG UI) is generated, providing a personalized and intuitive interface for each user.

In some embodiments, the system includes a Real-Time Data Mesh (RTDM) that efficiently manages data workflows. This includes modules for ingesting data from various sources, cleaning and standardizing the data, transforming data for real-time analytics, managing metadata, and optimizing data storage. The advanced data handling capabilities ensure high-quality, consistent, and readily available data for personalized user experiences.

In some embodiments, the platform utilizes an Advanced Analytic and Machine Learning (AAML) module as the core analytical engine. This module performs complex data analyses using advanced AI models, integrates workflows across various components, adapts processing strategies based on new data insights, and facilitates data integration with external platforms. This ensures adaptive data processing and analysis, enhancing the overall functionality and intelligence of the platform.

In some embodiments, the platform features a dynamic and customizable user interface. A Dynamic User Interface Engine tailors the interface to user roles and preferences, an Interactive Visualization Toolkit provides various data visualization options, and a Real-Time Collaboration Framework supports collaborative tools and real-time data manipulation. Security and compliance are maintained by implementing advanced security features such as biometric access controls and advanced encryption standards.

In some embodiments, the platform continuously learns from user interactions and improves personalization using an AI Learner. This component employs deep learning models to analyze interaction data and user feedback, allowing the system to adapt to changes in user behavior and preferences dynamically. Personalized recommendations are provided by a Recommendation System, and the effectiveness of these processes is monitored by a Performance Monitor. User feedback is collected and integrated by a Feedback Integrator, ensuring continuous refinement and alignment with user expectations.

In some non-limiting examples, the platform includes a Dynamic Content Generator that updates content based on user interactions using real-time data streams and data integration techniques. This ensures that the content displayed on the SPoG UI is always current and relevant. The AI Learner employs deep learning models such as recurrent neural networks (RNNs) and long short-term memory (LSTM) networks to enhance the system's adaptive capabilities.

The system claims cover a server configured to execute instructions for collecting initial user data, analyzing the data to identify user roles, monitoring user interactions, aggregating preferences, generating a personalized user interface, dynamically updating content, employing AI techniques for continuous learning, providing personalized recommendations, monitoring process effectiveness, and collecting user feedback. Additional features include data ingestion, cleaning, transformation, metadata management, storage optimization, complex data analysis, workflow integration, processing adaptation, and external data integration.

The method claims include steps for collecting user data, analyzing the data to identify roles, monitoring interactions, aggregating preferences, generating a personalized interface, dynamically updating content, employing AI for continuous learning, providing recommendations, monitoring effectiveness, and collecting feedback. Additional steps involve data ingestion, cleaning, transformation, metadata management, storage optimization, performing complex analyses, integrating workflows, adapting processing strategies, and facilitating external data integration.

The computer-readable medium claims involve instructions for collecting user data, analyzing the data to identify roles, monitoring interactions, aggregating preferences, generating a personalized interface, dynamically updating content, employing AI for continuous learning, providing recommendations, monitoring effectiveness, and collecting feedback. Additional instructions cover data ingestion, cleaning, transformation, metadata management, storage optimization, complex data analysis, workflow integration, processing adaptation, and external data integration.

### BRIEF DESCRIPTION OF THE DRAWINGS/FIGURES

FIG. 1 is an illustration of a system for persona identification, according to some embodiments.
FIG. 2 is an illustration of a system for personalized UI/UX, according to some embodiments.
FIG. 3 is an illustration of a system for content customization, according to some embodiments.
FIG. 4 is an illustration of a system for AI learning and personalization, according to some embodiments.
FIG. 5 is an illustration of a system for customized dashboards, according to some embodiments.
FIG. 6 is a flow diagram of a method for performing customized content delivery and interface personalization, according to some embodiments.

### DETAILED DESCRIPTION OF THE INVENTION

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

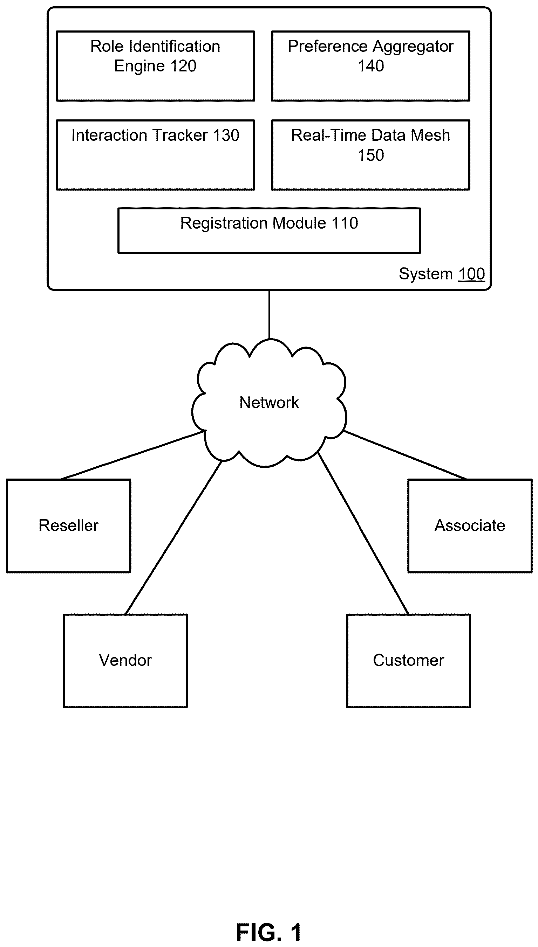

FIG. 1 illustrates the system 100 for persona identification. System 100 can be configured to recognize the user's role and preferences based on initial registration data, login credentials, and ongoing interaction patterns. System 100 can include the Registration Module 110, the Role Identification Engine 120, the Interaction Tracker 130, the Preference Aggregator 140, and the Data Processor 150.

The Registration Module 110 can be the initial point of interaction for new users. It collects detailed user data through a comprehensive registration form, which can include fields for name, contact information, organization, role, and specific preferences. The Registration Module 110 integrates with identity verification systems to ensure the authenticity of the user data. The Registration Module 110 interfaces with external databases and directories to pull in additional user details that help in forming a precise initial user profile.

The Role Identification Engine 120 analyzes the data collected during registration to determine the user's role within the distribution network. The Role Identification Engine 120 can use a set of predefined rules and machine learning algorithms to classify users into categories such as MSP manager, sales representative, vendor, reseller, or end customer. The Role Identification Engine 120 can use natural language processing (NLP) to parse free-text input fields and extract relevant information that may indicate the user's role and responsibilities. It continuously refines its classification models by learning from new data and feedback.

The Interaction Tracker 130 monitors user activities and interactions within the platform. The Interaction Tracker 130 logs actions such as navigation paths, time spent on different sections, frequency of feature usage, and response to notifications and alerts. The Interaction Tracker 130 can use event-driven architecture to capture real-time interaction data, which can be stored in a centralized repository. The Interaction Tracker 130 can use complex event processing (CEP) to detect patterns and anomalies in user behavior, providing insights into user preferences and engagement levels.

The Preference Aggregator 140 compiles user preferences based on data from the Registration Module 110 and Interaction Tracker 130. The Preference Aggregator 140 consolidates this data to create a comprehensive preference profile for each user. The Preference Aggregator 140 can use collaborative filtering and content-based filtering techniques to predict user preferences and recommend relevant features, content, and actions. The Preference Aggregator 140 also allows users to manually adjust their preferences through a user-friendly interface, ensuring that the system aligns with their evolving needs.

The Data Processor 150 integrates data from all components to generate a detailed user persona. The Data Processor 150 can use data fusion techniques to combine structured and unstructured data, ensuring a holistic view of the user. The Data Processor 150 can use data mining algorithms to extract actionable insights from the aggregated data. The Data Processor 150 performs statistical analysis to identify trends and correlations, which help in refining the user profiles. The Data Processor 150 also ensures data consistency and integrity by implementing data validation and cleansing procedures.

Upon accessing the platform, the user can be prompted to complete the registration form provided by the Registration Module 110. This form collects essential data such as name, contact details, organization type, and specific role within the organization. The Registration Module 110 validates the data for accuracy and completeness, interfacing with external identity verification systems as needed. The Registration Module 110 also queries external databases to enrich the user profile with additional information.

Once the registration data is collected, the Role Identification Engine 120 processes this data to classify the user into a specific role category. The Role Identification Engine 120 can use a combination of rule-based logic and machine learning algorithms to analyze the data. For instance, keywords and phrases indicating job titles, department names, and responsibilities can be extracted using NLP techniques. The Role Identification Engine 120 compares these against a predefined role taxonomy to determine the user's role. The role classification can be refined over time as the Role Identification Engine 120 learns from new data and feedback.

As the user begins interacting with the platform, the Interaction Tracker 130 logs all actions in real-time. This can include navigation paths, time spent on various sections, feature usage frequency, and responses to system notifications and alerts. The Interaction Tracker 130 can use an event-driven architecture to capture and store interaction data in a centralized repository. The Interaction Tracker 130 can use CEP to detect significant patterns and anomalies in user behavior, providing deeper insights into user engagement and preferences.

The Preference Aggregator 140 compiles data from the Registration Module 110 and Interaction Tracker 130 to create a comprehensive preference profile for the user. The Preference Aggregator 140 can use collaborative filtering techniques to analyze similarities between the current user and other users with similar profiles. The Preference Aggregator 140 also can use content-based filtering to recommend features and content based on the user's past interactions and stated preferences. The Preference Aggregator 140 continuously updates the user profile as new interaction data becomes available.

The Data Processor 150 integrates data from all the components to generate a detailed user persona. This involves data fusion techniques to combine structured data, such as registration details, with unstructured data, such as interaction logs. The Data Processor 150 can use data mining algorithms to extract meaningful insights and identify trends and correlations. For example, it might discover that users with a specific role tend to use certain features more frequently. The Data Processor 150 ensures data consistency and integrity through validation and cleansing procedures, producing a refined and actionable user persona.

The system 100 can be configured to continuously learn from user interactions and adapt accordingly. The AI components within the Role Identification Engine 120 and Preference Aggregator 140 can be regularly updated with new data, allowing them to refine their models and predictions. This ensures that the platform remains responsive to the changing needs and behaviors of its users. Feedback loops can be established to incorporate user feedback into the system, enhancing its accuracy and relevance over time.

Based on the generated user persona, the platform dynamically adjusts its interface and functionalities. The personalized UI/UX component utilizes the data from the Data Processor 150 to display relevant widgets, shortcuts, and actions customized to the user's role and preferences. This customization enhances the user experience by providing a focused and efficient interface that aligns with the user's specific needs within the IT distribution network.

The system 100 can use NLP within the Role Identification Engine 120 to parse and analyze free-text inputs, extracting relevant information to classify user roles. Machine learning algorithms can be used to refine role classification and preference predictions based on historical data and ongoing interactions. An event-driven architecture can be utilized by the Interaction Tracker 130 to capture real-time user interactions, enabling immediate logging and analysis. CEP can be applied to detect patterns and anomalies in user behavior, providing insights into user engagement. Collaborative filtering and content-based filtering techniques can be used by the Preference Aggregator 140 to recommend relevant features and content. Data fusion techniques can be employed by the Data Processor 150 to integrate structured and unstructured data, ensuring a comprehensive view of the user. Data mining algorithms can be used to extract actionable insights from aggregated data, identifying trends and correlations.

This detailed embodiment of FIG. 1 outlines the technical aspects and operations of the system 100 for persona identification, highlighting the integration and interaction of various components to achieve a customized platform experience for each user in the IT distribution network.

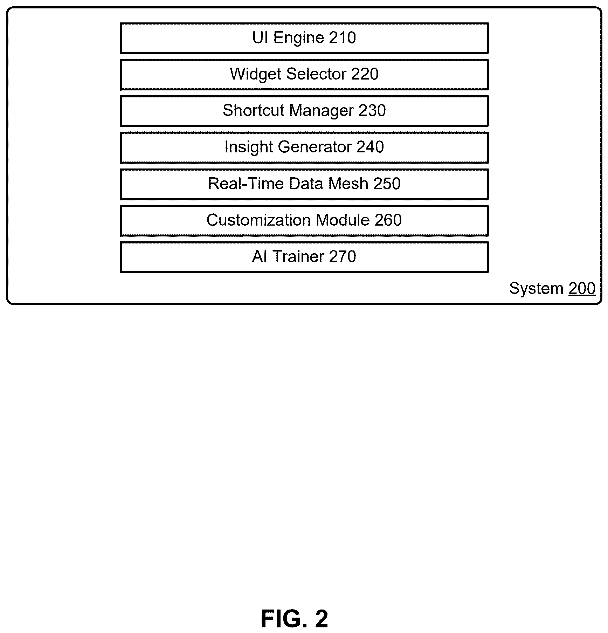

FIG. 2 illustrates the system 200 for personalized UI/UX. System 200 can be configured to dynamically adjust the interface based on the identified persona. System 200 can include the UI Engine 210, the Widget Selector 220, the Shortcut Manager 230, the Action Recommender 240, the Real-time Data Integrator 250, the Customization Module 260, and the AI Learner 270.

The UI Engine 210 can be configured to generating the user interface based on the user persona data received from the system 100. The UI Engine 210 constructs the basic framework of the interface, ensuring that it can be flexible and adaptable to accommodate various widgets and components as dictated by the user's role and preferences. The UI Engine 210 interacts closely with the other components of the system 200 to integrate all personalized elements.

The Widget Selector 220 plays a crucial role in customizing the user interface by choosing relevant widgets that align with the user's role and preferences. The Widget Selector 220 utilizes data from the user persona to determine which widgets can be most beneficial for the user. For instance, an MSP manager might have widgets related to quick order start, quotes, pay invoices, and sales interactions, while a vendor might see widgets for orders, shipments, marketing activities, and partner performance. The Widget Selector 220 continuously updates the widget selection based on real-time interaction data and feedback from the AI Learner 270.

The Shortcut Manager 230 enhances the user experience by displaying frequently used shortcuts customized to the user's role and interaction patterns. The Shortcut Manager 230 analyzes the user's navigation and usage history to identify the most commonly accessed features and functions. These shortcuts can then be prominently displayed on the user interface, allowing the user to quickly access the tools and information they need. The Shortcut Manager 230 dynamically adjusts the shortcuts as the user's interaction patterns evolve over time.

The Action Recommender 240 suggests actions based on the user's role-specific needs and ongoing activities. The Action Recommender 240 can use predictive analytics and machine learning algorithms to anticipate the user's requirements and propose relevant actions. For example, if an MSP manager frequently reviews quotes and invoices, the Action Recommender 240 might suggest actions related to these tasks. The Action Recommender 240 can be continuously refined by the AI Learner 270 to improve the accuracy and relevance of its suggestions.

The Real-time Data Integrator 250 updates the user interface with real-time data relevant to the user's role and preferences. The Real-time Data Integrator 250 collects data from various sources, including internal databases, external APIs, and third-party services, to ensure that the user has access to the most current information. This component ensures that the data displayed on the interface is current, enhancing the user's ability to make informed decisions. The Real-time Data Integrator 250 works closely with the UI Engine 210 to dynamically update the interface as new data becomes available.

The Customization Module 260 allows users to manually adjust their interface to better suit their preferences. The Customization Module 260 provides a user-friendly interface where users can select and arrange widgets, adjust settings, and personalize their experience. This module records user adjustments and preferences, feeding this data back to the AI Learner 270 to further refine the system's ability to predict and meet user needs. The Customization Module 260 ensures that users have control over their interface, enhancing their overall satisfaction with the platform.

The AI Learner 270 enables continuous learning and improvement within the system 200. The AI Learner 270 analyzes interaction data, user feedback, and system performance to refine the algorithms used by the Widget Selector 220, the Shortcut Manager 230, the Action Recommender 240, and the Real-time Data Integrator 250. The AI Learner 270 can use machine learning techniques to identify patterns and trends in user behavior, enabling the system to make more accurate predictions and adjustments over time. The AI Learner 270 ensures that the system 200 remains responsive and adaptive to the changing needs of its users.

The process begins with the UI Engine 210 constructing the basic framework of the user interface based on the user persona data. The Widget Selector 220 then determines which widgets can be most relevant for the user and integrates them into the interface. The Shortcut Manager 230 analyzes the user's navigation and usage history to identify frequently used features, which can then be displayed as shortcuts on the interface. The Action Recommender 240 can use predictive analytics to suggest relevant actions based on the user's role-specific needs and ongoing activities. The Real-time Data Integrator 250 ensures that the data displayed on the interface is always current by collecting and integrating real-time data from various sources. The Customization Module 260 allows users to manually adjust their interface, and these adjustments can be recorded and fed back to the AI Learner 270. The AI Learner 270 continuously refines the system's algorithms based on interaction data, user feedback, and system performance, ensuring that the system remains responsive and adaptive to the user's needs.

The AI Learner 270 can utilize a variety of machine learning algorithms to enhance personalization and recommendation processes. In some non-limiting examples, this can include the use of decision trees for role classification, support vector machines (SVM) for refining user preferences, and reinforcement learning to dynamically adjust shortcuts and interface elements based on user interactions. Additionally, the AI Learner 270 can employ deep learning models such as recurrent neural networks (RNNs) and long short-term memory (LSTM) networks to analyze sequential data and recognize long-term user behavior patterns. These models are trained continuously using real-time interaction data, ensuring the system adapts to changes in user preferences and behaviors effectively.

The UI Engine 210 can be configured to generating the user interface, ensuring flexibility and adaptability. The Widget Selector 220 customizes the interface by choosing relevant widgets, updating the selection based on real-time interaction data and feedback from the AI Learner 270. The Shortcut Manager 230 displays frequently used shortcuts, dynamically adjusting them as the user's interaction patterns evolve. The Action Recommender 240 suggests actions based on the user's needs, using predictive analytics and machine learning algorithms refined by the AI Learner 270. The Real-time Data Integrator 250 updates the interface with current data, ensuring informed decision-making. The Customization Module 260 allows manual adjustments, enhancing user control and satisfaction. The AI Learner 270 analyzes data to refine system algorithms, ensuring continuous improvement and adaptability.

System 200 can use a combination of technologies to achieve a personalized UI/UX experience. The UI Engine 210 can use a flexible framework to accommodate various widgets and components. The Widget Selector 220 can use data analysis to determine relevant widgets, updating selections based on real-time data. The Shortcut Manager 230 can use navigation and usage history analysis to display frequently used features. The Action Recommender 240 can use predictive analytics and machine learning to suggest relevant actions. The Real-time Data Integrator 250 can use data collection and integration techniques to ensure current information display. The Customization Module 260 can use a user-friendly interface for manual adjustments. The AI Learner 270 can use machine learning to analyze data and refine system algorithms.

In summary, FIG. 2 illustrates the system 200 for personalized UI/UX, highlighting the integration and interaction of components such as the UI Engine 210, the Widget Selector 220, the Shortcut Manager 230, the Action Recommender 240, the Real-time Data Integrator 250, the Customization Module 260, and the AI Learner 270 to provide a customized and dynamic user experience for each user in the IT distribution network.

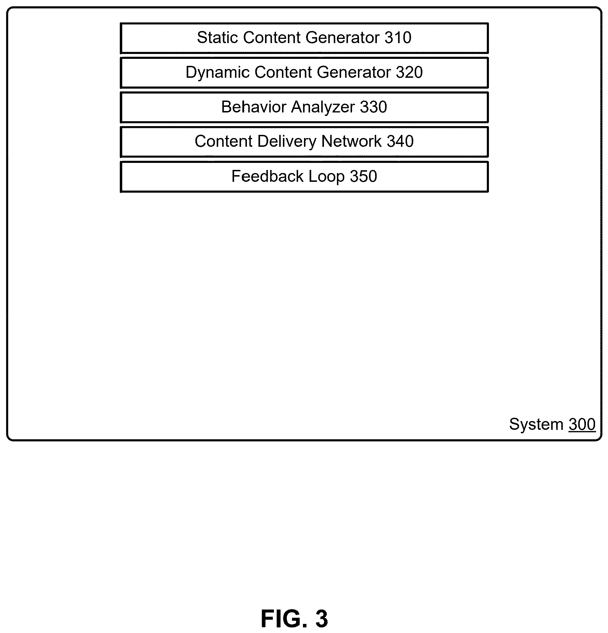

FIG. 3 illustrates the system 300 for content customization. System 300 can be configured to customize content based on user behavior and needs. System 300 can include the Static Content Generator 310, the Dynamic Content Generator 320, the Behavior Analyzer 330, the Content Delivery Network 340, and the Feedback Loop 350.

The Static Content Generator 310 provides role-specific static content to the user interface. The Static Content Generator 310 utilizes predefined templates and content repositories to deliver information that may be relevant to the user's role and preferences. This static content can include user manuals, best practice guides, whitepapers, and other documentation that remains relatively unchanged over time. The Static Content Generator 310 ensures that each user has access to foundational content customized to their specific needs within the IT distribution network.

The Dynamic Content Generator 320 updates content in real-time based on user interactions and behavior. The Dynamic Content Generator 320 can use algorithms to analyze ongoing user activities and adjust the content presented accordingly. For instance, if a user frequently searches for information about a particular product, the Dynamic Content Generator 320 will prioritize displaying the latest updates, offers, and news related to that product. This component ensures that the content remains relevant and timely, enhancing the user's engagement and decision-making process.

The Behavior Analyzer 330 plays a crucial role in understanding and predicting user behavior. The Behavior Analyzer 330 collects and analyzes data from user interactions, including navigation patterns, search queries, and content consumption habits. By employing machine learning and statistical analysis techniques, the Behavior Analyzer 330 identifies trends and patterns in user behavior. These insights can be used to inform the content customization process, ensuring that the content aligns with the user's evolving needs and preferences.

The Content Delivery Network 340 ensures fast and efficient delivery of both static and dynamic content to the user interface. The Content Delivery Network 340 can use a distributed network of servers to deliver content with minimal latency and high availability. This component integrates with various content sources, including internal databases and external APIs, to fetch and deliver content in real-time. The Content Delivery Network 340 ensures that users receive a content experience customized based on persona, regardless of their geographical location or the complexity of the content.

The Feedback Loop 350 collects user feedback to refine the content customization process. The Feedback Loop 350 can use various mechanisms, including user surveys, interaction logs, and direct feedback forms, to gather insights from users about their content experience. This feedback can be analyzed and used to adjust the algorithms and strategies employed by the Static Content Generator 310, the Dynamic Content Generator 320, and the Behavior Analyzer 330. The Feedback Loop 350 ensures that the content customization process can be continuously improved based on actual user experiences and preferences.

The process begins with the Static Content Generator 310 providing foundational content customized to the user's role and preferences. The Dynamic Content Generator 320 then updates this content in real-time based on user interactions and behavior, ensuring that the content remains relevant and timely. The Behavior Analyzer 330 collects and analyzes data from user interactions to identify trends and patterns, which can be used to inform the content customization process. The Content Delivery Network 340 ensures fast and efficient delivery of content to the user interface, integrating with various content sources to fetch and deliver content in real-time. The Feedback Loop 350 collects user feedback to refine the content customization process, ensuring continuous improvement and alignment with user needs.

The Static Content Generator 310 provides role-specific static content, utilizing predefined templates and content repositories. The Dynamic Content Generator 320 updates content in real-time, employing algorithms to analyze user activities and adjust content presentation. The Behavior Analyzer 330 collects and analyzes data from user interactions, employing machine learning and statistical analysis techniques to identify trends and patterns. The Content Delivery Network 340 ensures fast and efficient content delivery, employing a distributed network of servers and integrating with various content sources. The Feedback Loop 350 collects user feedback, employing various mechanisms to gather insights and adjust the content customization process.

System 300 can use a combination of technologies to achieve customized content customization. The Static Content Generator 310 can use predefined templates and content repositories to deliver role-specific static content. The Dynamic Content Generator 320 can use algorithms to analyze user activities and update content in real-time. The Behavior Analyzer 330 can use machine learning and statistical analysis techniques to identify trends and patterns in user behavior. The Content Delivery Network 340 can use a distributed network of servers to ensure fast and efficient content delivery. The Feedback Loop 350 can use various mechanisms to collect user feedback and refine the content customization process.

In summary, FIG. 3 illustrates the system 300 for content customization, highlighting the integration and interaction of components such as the Static Content Generator 310, the Dynamic Content Generator 320, the Behavior Analyzer 330, the Content Delivery Network 340, and the Feedback Loop 350 to provide customized content based on user behavior and needs within the IT distribution network. This system ensures that users receive relevant, timely, and engaging content, enhancing their overall experience and decision-making process.

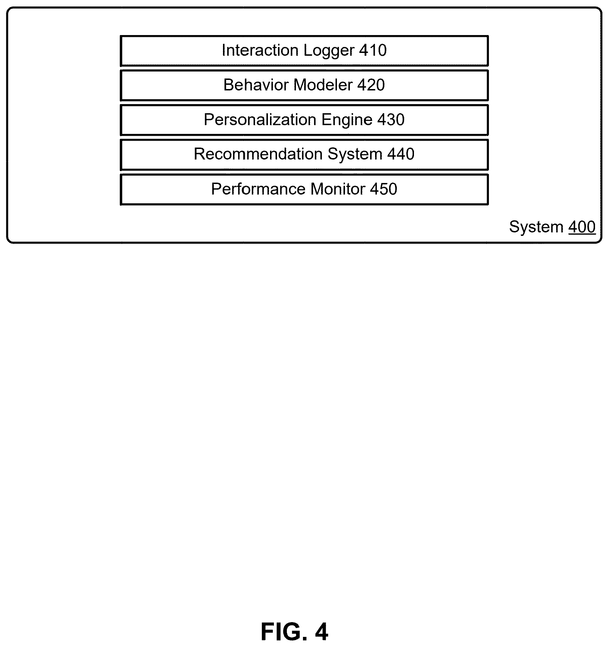

FIG. 4 illustrates the system 400 for AI learning and personalization. System 400 can be configured to use AI to continuously learn from user interactions and improve personalization. System 400 can include the Interaction Logger 410, the Behavior Modeler 420, the Personalization Engine 430, the Recommendation System 440, and the Performance Monitor 450.

The Interaction Logger 410 can be configured to logging all user interactions within the platform. The Interaction Logger 410 captures data such as navigation paths, time spent on various sections, frequency of feature usage, responses to notifications, and actions taken. This data can be stored in a centralized repository and serves as the foundation for the learning and personalization processes. The Interaction Logger 410 ensures that comprehensive and accurate interaction data can be available for analysis.

The Behavior Modeler 420 analyzes the data collected by the Interaction Logger 410 to model user behavior. The Behavior Modeler 420 can use machine learning algorithms and statistical analysis techniques to identify patterns, trends, and correlations in user behavior. These behavior models can be continuously refined as new interaction data becomes available. The Behavior Modeler 420 helps in understanding the preferences, habits, and needs of the users for effective personalization.

The Personalization Engine 430 can use the behavior models generated by the Behavior Modeler 420 to adjust the interface and content dynamically. The Personalization Engine 430 can use AI techniques to predict what features, content, and actions will be most relevant to each user at any given time. This component ensures that the user interface and content can be customized to the individual needs and preferences of the user, enhancing their overall experience. The Personalization Engine 430 interacts closely with other components of the platform to implement these adjustments in real-time.

The Recommendation System 440 provides personalized recommendations to the users based on their behavior models and interaction data. The Recommendation System 440 can use collaborative filtering, content-based filtering, and hybrid recommendation techniques to suggest products, features, and actions that can likely be of interest to the user. These recommendations can be presented in a contextually relevant manner, ensuring that they are both timely and useful. The Recommendation System 440 continuously updates its recommendation algorithms based on user feedback and interaction data, ensuring that the recommendations remain accurate and relevant.

In some embodiments, Recommendation System 440 can employ collaborative filtering, content-based filtering, and hybrid recommendation techniques to suggest relevant products and services to users. This can include cross-selling and up-selling opportunities, where the system analyzes purchase patterns and user behavior to recommend complementary products and services. For instance, when a user is purchasing a laptop, the system may suggest additional warranties, software packages, and accessories that enhance the primary product. These recommendations are generated using a combination of matrix factorization techniques for collaborative filtering and cosine similarity for content-based filtering.

The Performance Monitor 450 monitors the effectiveness of the AI-driven personalization and recommendation processes. The Performance Monitor 450 collects data on key performance indicators (KPIs) such as user engagement, satisfaction, and retention. This component can use statistical analysis and machine learning techniques to evaluate the impact of the personalization and recommendation processes on these KPIs. The Performance Monitor 450 provides feedback to the other components, allowing for continuous improvement and refinement of the AI-driven processes.

The process begins with the Interaction Logger 410 capturing detailed user interaction data. The Behavior Modeler 420 then analyzes this data to create behavior models, identifying patterns and trends in user behavior. The Personalization Engine 430 can use these behavior models to dynamically adjust the interface and content, ensuring that they can be tailored to the user's preferences and needs. The Recommendation System 440 provides personalized recommendations based on the behavior models and interaction data, presenting them in a contextually relevant manner. The Performance Monitor 450 evaluates the effectiveness of the personalization and recommendation processes, providing feedback for continuous improvement.

The Interaction Logger 410 captures comprehensive user interaction data, ensuring that all relevant actions and behaviors can be logged. The Behavior Modeler 420 can use machine learning algorithms and statistical analysis techniques to create and refine behavior models. The Personalization Engine 430 can use AI techniques to dynamically adjust the interface and content based on the behavior models. The Recommendation System 440 can use collaborative filtering, content-based filtering, and hybrid recommendation techniques to provide personalized recommendations. The Performance Monitor 450 can use statistical analysis and machine learning techniques to evaluate the effectiveness of the AI-driven processes and provide feedback for continuous improvement.

System 400 can use a combination of technologies to achieve continuous learning and personalization. The Interaction Logger 410 can use event-driven architecture to capture detailed interaction data. The Behavior Modeler 420 can use machine learning algorithms and statistical analysis techniques to model user behavior. The Personalization Engine 430 can use AI techniques to dynamically adjust the interface and content. The Recommendation System 440 can use collaborative filtering, content-based filtering, and hybrid recommendation techniques to provide personalized recommendations. The Performance Monitor 450 can use statistical analysis and machine learning techniques to evaluate the effectiveness of the AI-driven processes.

In summary, FIG. 4 illustrates the system 400 for AI learning and personalization, highlighting the integration and interaction of components such as the Interaction Logger 410, the Behavior Modeler 420, the Personalization Engine 430, the Recommendation System 440, and the Performance Monitor 450 to provide a continuously improving and highly personalized user experience within the IT distribution network. This system ensures that the platform remains responsive to the changing needs and preferences of its users, enhancing their overall satisfaction and engagement.

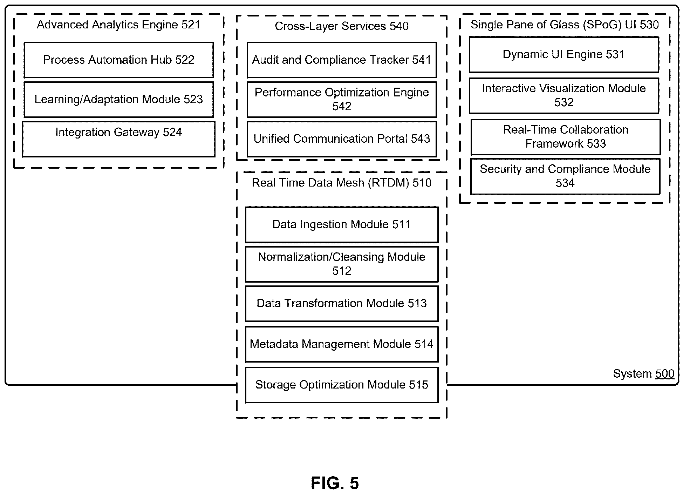

FIG. 5 illustrates System 500, an advanced configuration for customized dashboards in an IT distribution platform, according to some embodiments of the present disclosure. System 500 can be configured to provide dynamic, personalized dashboards by leveraging integrated sub-components that enhance data handling, processing, and presentation capabilities. System 500 can include multiple layers, each featuring specific functionalities that contribute to the system's overall performance.

The Real-Time Data Mesh (RTDM) 510 of System 500 can be configured as an AI-based vendor and customer agnostic framework to integrate legacy systems into the distribution platform. RTDM 510 manages complex data workflows efficiently. This layer can include the Ingestion Module 511, which automates the data ingestion process from various sources such as IoT devices, cloud sources, and traditional databases. The Normalization and Cleansing Module 512 can use advanced algorithms and machine learning models to clean and standardize incoming data, ensuring quality and consistency. The Data Transformation Module 513 supports real-time data streaming transformations, facilitating immediate analytics and decision-making processes. The Metadata Management Module 514 effectively manages metadata, enhancing data governance and discoverability. The Storage Optimization Module 515 optimizes data storage and retrieval, adjusting data storage methods and structures based on usage patterns and access frequencies.

In some embodiment, RTDM 510 can leverage technologies such as Apache Kafka for efficient data ingestion and streaming, Apache Flink for real-time data processing, and Apache Storm for event-driven data analysis, or any other platforms. These technologies can enable the RTDM to handle large volumes of data from various sources, ensuring that data is processed and integrated in real-time. The distribution platform maintains current and relevant information, enhancing the overall user experience.

The Advanced Analytic and Machine Learning (AAML) Module 520 of System 500 serves as the core analytical engine, where complex data processing and analysis can be performed. The Advanced Analytics Engine 521 executes complex data analyses, including predictive and prescriptive analytics, using cutting-edge artificial intelligence models. The Process Automation Hub 522 integrates complex workflows across various components and external systems, enhancing operational efficiency. The Learning and Adaptation Module 523 contains self-learning algorithms that adapt processing strategies based on new data insights and operational feedback. The Integration Gateway 524 facilitates data integration with external platforms, enabling System 500 to function within a larger ecosystem of business tools.

The Single Pane of Glass (SPoG) User Interface (UI) 530 of System 500 provides dynamic and customizable user interaction capabilities. The Dynamic User Interface Engine 531 provides highly customizable interfaces tailored to user roles and individual preferences, enhancing user engagement. In some embodiments, Dynamic User Interface Engine 531 enables users to interactively customize their interface through features such as drag-and-drop functionality for widgets and real-time toggling of interface elements. These customization options can be implemented using React.js and asynchronous data handling, or other suitable technologies, to ensure smooth and responsive user interactions. The system can track these customizations and implement reinforcement learning to prioritize frequently used features and adjust the interface layout dynamically based on user behavior.

The Interactive Visualization Toolkit 532 can include a broad range of data visualization options such as 3D modeling and predictive scenario visualization, allowing users to interact with data in innovative ways. The Real-Time Collaboration Framework 533 supports enhanced collaborative tools, including virtual workspaces and real-time data manipulation, facilitating effective teamwork. The Security and Compliance Module 534 implements advanced security features such as biometric access controls and advanced encryption standards to ensure data integrity and compliance with global data protection regulations.

Cross-Layer Services 540 in System 500 provide services that span across the data management, processing, and presentation layers. The Audit and Compliance Tracker 541 monitors and records all operations within the system to ensure compliance with internal and external regulations. The Performance Optimization Engine 542 dynamically adjusts system resources and processing parameters to optimize performance across all layers. The Unified Communication Portal 543 integrates communication tools across the platform, enabling users to interact through voice, video, and text within the system environment.

The process begins with the Real-Time Data Mesh (RTDM) 510 managing the ingestion, normalization, cleansing, transformation, and storage optimization of data. The Ingestion Module 511 collects data from various sources, which the Normalization and Cleansing Module 512 cleans and standardizes. The Data Transformation Module 513 performs real-time transformations, while the Metadata Management Module 514 and Storage Optimization Module 515 handle metadata and storage efficiency, respectively.

Next, the Advanced Analytic and Machine Learning (AAML) Module 520 processes the data. The Advanced Analytics Engine 521 performs complex analyses, including predictive and prescriptive analytics. The Process Automation Hub 522 integrates workflows, and the Learning and Adaptation Module 523 can use self-learning algorithms to adapt strategies based on new insights. The Integration Gateway 524 ensures data integration via the RTDM with external platforms.

The Single Pane of Glass (SPoG) User Interface (UI) 530 then presents the personalized dashboards to users. The Dynamic User Interface Engine 531 can customize the interface to user roles and preferences. The Interactive Visualization Toolkit 532 offers various data visualization options, while the Real-Time Collaboration Framework 533 supports collaborative tools and real-time data manipulation. The Security and Compliance Module 534 ensures data integrity and compliance.

Finally, Cross-Layer Services 540 enhance the overall system performance and compliance. The Audit and Compliance Tracker 541 monitors system operations, the Performance Optimization Engine 542 optimizes resources and processing parameters, and the Unified Communication Portal 543 integrates communication tools across the platform.
System 500 provides a scalable and secure platform capable of supporting extensive IT distribution operations by delivering dynamic, personalized dashboards. This system ensures that users receive relevant, timely, and engaging content tailored to their specific roles and preferences within the IT distribution network.

It should be understood that the operations shown in the exemplary methods are not exhaustive and that other operations can be performed as well before, after, or between any of the illustrated operations. In some embodiments of the present disclosure, the operations can be performed in a different order and/or vary.

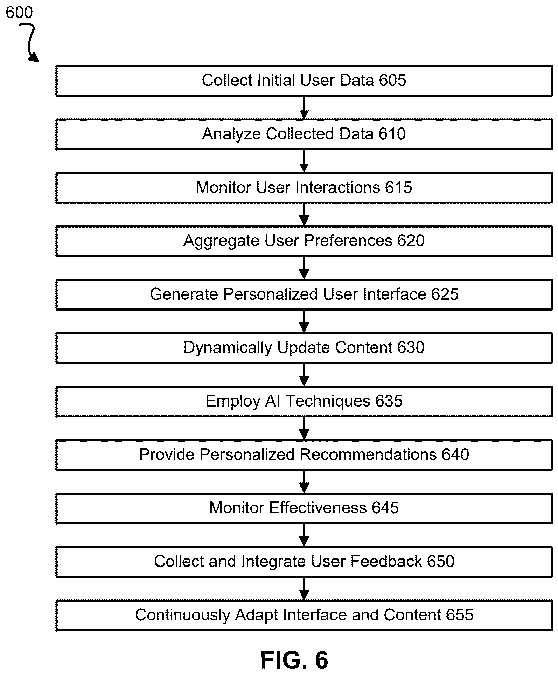

FIG. 6 is a flow diagram of a method 600 for performing customized content delivery and interface personalization in an IT distribution platform, according to some embodiments of the present disclosure. In some embodiments, method 600 provides operational steps to customize the user interface and content based on individual user personas. In some embodiments, method 600 performs continuous learning and adaptation to enhance user experience. Based on the disclosure herein, operations in method 600 can be performed in a different order and/or vary.

At operation 605, a computing device can collect initial user data through a registration process. This data can include user information such as name, contact details, organization, role, and specific preferences. The registration module interfaces with external databases to enrich the user profile with additional information, using APIs to pull data from social media profiles, professional networks like LinkedIn, and industry databases. This initial data collection provides a comprehensive view of the user, laying the groundwork for personalized experiences.

At operation 610, the computing device analyzes the collected data to identify the user's role within the IT distribution network. The role identification engine can use predefined rules and machine learning algorithms such as decision trees and support vector machines (SVM) to classify the user into categories such as MSP manager, sales representative, vendor, reseller, or end customer. For instance, a decision tree might be used to classify users based on job titles and department names extracted from the registration data, while an SVM might refine this classification by considering additional context and nuances.

At operation 615, the computing device monitors user interactions within the platform. The interaction tracker logs actions such as navigation paths, time spent on different sections, frequency of feature usage, and responses to notifications and alerts. This interaction data can be stored in a centralized repository and serves as the foundation for the AI-driven personalization process. For example, the interaction tracker might use a combination of event-driven architecture and Apache Kafka to capture and process real-time interaction data efficiently.

At operation 620, the computing device aggregates user preferences from the collected data and interaction logs. The preference aggregator compiles a comprehensive preference profile for each user, using collaborative filtering algorithms like matrix factorization and content-based filtering techniques such as TF-IDF (Term Frequency-Inverse Document Frequency) to predict user preferences and recommend relevant features, content, and actions. For instance, collaborative filtering might suggest products based on similarities with other users, while content-based filtering would recommend items that share characteristics with previously interacted content.

At operation 625, the computing device can generate a personalized user interface. The UI engine constructs the interface framework, while the widget selector can use algorithms like k-means clustering to group similar widgets and determine which are most relevant for the user's role and preferences. The shortcut manager can use reinforcement learning to prioritize shortcuts based on past usage patterns, and the action recommender can use predictive analytics models such as logistic regression to suggest actions based on the user's needs. This customization enhances the user's efficiency and satisfaction by presenting a customized and intuitive interface.

At operation 630, the computing device dynamically updates the content displayed on the user interface. The dynamic content generator can use real-time data streams and technologies like Apache Storm to update content based on user interactions. This ensures that the content remains relevant and timely, reflecting the latest information and trends. The real-time data integrator can use tools like Apache Flink to ensure that the displayed information can be current and accurate by integrating data from various sources, including internal databases, external APIs, and third-party services.

At operation 635, the computing device can use AI techniques to continuously learn from user interactions and improve personalization. The AI learner can use deep learning models such as recurrent neural networks (RNNs) and long short-term memory (LSTM) networks to analyze interaction data and user feedback. These models are particularly adept at handling sequential data and identifying long-term dependencies, allowing the system to recognize patterns and trends in user behavior over time. For example, an RNN might learn that a particular user tends to order specific types of products at the end of each quarter, adjusting the interface and content to highlight these products as the quarter-end approaches. The AI learner continuously updates its models with new data, ensuring that the system adapts to changes in user preferences and behaviors dynamically.

At operation 640, the computing device provides personalized recommendations to the user. The recommendation system can use a hybrid recommendation approach, combining collaborative filtering, content-based filtering, and knowledge-based systems. For example, matrix factorization might be used for collaborative filtering to identify latent factors in user-item interactions, while content-based filtering leverages cosine similarity to recommend items similar to those previously interacted with. Knowledge-based systems use domain-specific rules to refine recommendations further. These recommendations are presented in a contextually relevant manner, ensuring that they enhance the user's decision-making process and engagement with the platform.

At operation 645, the computing device monitors the effectiveness of the personalization and recommendation processes. The performance monitor collects data on key performance indicators (KPIs) such as user engagement, satisfaction, and retention. This component can use statistical analysis techniques like ANOVA (Analysis of Variance) and machine learning models such as random forests to evaluate the impact of the personalization efforts. The performance monitor provides feedback to the other components, allowing for continuous improvement and refinement of the AI-driven processes. For instance, if a drop in engagement is detected, the performance monitor might trigger a re-evaluation of the recommendation algorithms and interface adjustments.

At operation 650, the computing device collects and integrates user feedback to refine the system. The feedback integrator gathers insights from user surveys, interaction logs, and direct feedback forms using natural language processing (NLP) techniques such as sentiment analysis and topic modeling. This feedback can be analyzed to identify areas for improvement and to adjust the algorithms and strategies employed by the system. The feedback integrator ensures that the system remains aligned with user expectations and requirements by incorporating user sentiment and direct suggestions into the refinement process.

At operation 655, the computing device continuously adapts the user interface and content based on the refined algorithms and updated behavior models. This operation ensures that the platform remains responsive to the changing needs and preferences of its users, enhancing their overall satisfaction and engagement. The continuous adaptation capability of the system allows the platform to evolve with the user, providing a consistently relevant and personalized experience. For example, adaptive algorithms like multi-armed bandit strategies might be used to dynamically test and deploy different interface variations to optimize user engagement and satisfaction.

In some embodiments, method 600 provides a comprehensive approach to delivering customized content and personalized interfaces in an IT distribution platform, leveraging AI and real-time data to enhance user experience. The operations in method 600 can be adapted and performed in different orders to suit specific implementation requirements. The novel aspects of method 600, particularly the continuous learning and adaptation processes facilitated by the AI learner and the dynamic content updates, set this method apart from traditional static or semi-static systems. This method ensures that each user receives a highly personalized and engaging experience customized to their specific role and preferences within the IT distribution network.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A system for providing a customized platform for every single persona in distribution, comprising:
a server, coupled to a processor, and configured to execute instructions that:
collect, by a Registration Module, initial user data through a registration process,
analyze, by a Role Identification Engine, the collected data to identify the user's role within the IT distribution network,
monitor, by an Interaction Tracker, user interactions within the platform, aggregate, by a Preference Aggregator, user preferences from the collected data and interaction logs,
generate, by a Single Pane of Glass User Interface (SPoG UI), a personalized user interface,
dynamically update, by a Dynamic Content Generator, the content displayed on the SPoG UI,
employ, by an AI Learner, AI techniques to continuously learn from user interactions and improve personalization,
provide, by a Recommendation System, personalized recommendations to the user,
monitor, by a Performance Monitor, the effectiveness of the personalization and recommendation processes,
collect and integrate, by a Feedback Integrator, user feedback to refine the system,
the system being defined by, the personalized SPoG UI and content being based on at least one of the user's role, preferences, and interactions.

2. The system of claim 1, wherein the server is further configured to execute instructions that:
ingest, by an Ingestion Module of a Real Time Data Mesh (RTDM), data from various sources,
clean and standardize, by a Normalization and Cleansing Module, the ingested data,
transform, by a Data Transformation Module, the data for real-time analytics,
manage, by a Metadata Management Module, metadata,
optimize, by a Storage Optimization Module, data storage and retrieval.

3. The system of claim 1, wherein the server is further configured to execute instructions that:
perform, by an Advanced Analytics Engine, complex data analyses,
integrate, by a Process Automation Hub, workflows across various components, adapt, by a Learning and Adaptation Module, processing strategies based on new data insights,
facilitate, by an Integration Gateway, data integration with external platforms.

4. The system of claim 1, wherein the server is further configured to execute instructions that:
provide, by the SPoG UI, a dynamic and customizable user interface,
offer, by an Interactive Visualization Toolkit, various data visualization options, support, by a Real-Time Collaboration Framework, collaborative tools and real-time data manipulation,
ensure, by a Security and Compliance Module, data integrity and compliance.

5. The system of claim 1, wherein the Dynamic Content Generator is configured to:
update content based on user interactions using real-time data streams and data integration techniques.

6. The system of claim 1, wherein the AI Learner employs:
deep learning models such as recurrent neural networks (RNNs) and long short-term memory (LSTM) networks to analyze interaction data and user feedback.

7. The system of claim 1, wherein the Performance Monitor evaluates:
key performance indicators (KPIs) such as user engagement, satisfaction, and retention using statistical analysis and machine learning models.

8. A computer-implemented method, comprising:
collecting, by a Registration Module, initial user data through a registration process,
analyzing, by a Role Identification Engine, the collected data to identify the user's role within the IT distribution network,
monitoring, by an Interaction Tracker, user interactions within the platform,
aggregating, by a Preference Aggregator, user preferences from the collected data and interaction logs,
generating, by a Single Pane of Glass User Interface (SPoG UI), a personalized user interface,
dynamically updating, by a Dynamic Content Generator, the content displayed on the SPoG UI,
employing, by an AI Learner, AI techniques to continuously learn from user interactions and improve personalization,
providing, by a Recommendation System, personalized recommendations to the user, monitoring, by a Performance Monitor, the effectiveness of the personalization and recommendation processes,
collecting and integrating, by a Feedback Integrator, user feedback to refine the system.

9. The method of claim 8, further comprising:
ingesting, by an Ingestion Module of a Real Time Data Mesh (RTDM), data from various sources,
cleaning and standardizing, by a Normalization and Cleansing Module, the ingested data,
transforming, by a Data Transformation Module, the data for real-time analytics,
managing, by a Metadata Management Module, metadata,
optimizing, by a Storage Optimization Module, data storage and retrieval.

10. The method of claim 8, further comprising:
performing, by an Advanced Analytics Engine, complex data analyses,
integrating, by a Process Automation Hub, workflows across various components,
adapting, by a Learning and Adaptation Module, processing strategies based on new data insights,
facilitating, by an Integration Gateway, data integration with external platforms.

11. The method of claim 8, further comprising:
providing, by the SPoG UI, a dynamic and customizable user interface,
offering, by an Interactive Visualization Toolkit, various data visualization options,
supporting, by a Real-Time Collaboration Framework, collaborative tools and real-time data manipulation,
ensuring, by a Security and Compliance Module, data integrity and compliance.

12. The method of claim 8, wherein the Dynamic Content Generator updates content:
based on user interactions using real-time data streams and data integration techniques.

13. The method of claim 8, wherein the AI Learner employs:
deep learning models such as recurrent neural networks (RNNs) and long short-term memory (LSTM) networks to analyze interaction data and user feedback.

14. The method of claim 8, wherein the Performance Monitor evaluates:
key performance indicators (KPIs) such as user engagement, satisfaction, and retention using statistical analysis and machine learning models.

15. A non-transitory tangible computer-readable device having instructions stored thereon that, when executed by a computing device, cause the computing device to perform operations comprising:
collecting, by a Registration Module, initial user data through a registration process, analyzing, by a Role Identification Engine, the collected data to identify the user's role within the IT distribution network,
monitoring, by an Interaction Tracker, user interactions within the platform, aggregating, by a Preference Aggregator, user preferences from the collected data and interaction logs,
generating, by a Single Pane of Glass User Interface (SPoG UI), a personalized user interface,
dynamically updating, by a Dynamic Content Generator, the content displayed on the SPoG UI,
employing, by an AI Learner, AI techniques to continuously learn from user interactions and improve personalization,
providing, by a Recommendation System, personalized recommendations to the user,
monitoring, by a Performance Monitor, the effectiveness of the personalization and recommendation processes,
collecting and integrating, by a Feedback Integrator, user feedback to refine the system.

16. The non-transitory tangible computer-readable device of claim 15, wherein the instructions further cause the computing device to:
ingest, by an Ingestion Module of a Real Time Data Mesh (RTDM), data from various sources,
clean and standardize, by a Normalization and Cleansing Module, the ingested data,
transform, by a Data Transformation Module, the data for real-time analytics,
manage, by a Metadata Management Module, metadata,
optimize, by a Storage Optimization Module, data storage and retrieval.

17. The non-transitory tangible computer-readable device of claim 15, wherein the instructions further cause the computing device to:
perform, by an Advanced Analytics Engine, complex data analyses,
integrate, by a Process Automation Hub, workflows across various components,
adapt, by a Learning and Adaptation Module, processing strategies based on new data insights,
facilitate, by an Integration Gateway, data integration with external platforms.

18. The non-transitory tangible computer-readable device of claim 15, wherein the instructions further cause the computing device to:
provide, by the SPoG UI, a dynamic and customizable user interface,
offer, by an Interactive Visualization Toolkit, various data visualization options,
support, by a Real-Time Collaboration Framework, collaborative tools and real-time data manipulation,
ensure, by a Security and Compliance Module, data integrity and compliance.

19. The non-transitory tangible computer-readable device of claim 15, wherein the instructions cause the Dynamic Content Generator to:
update content based on user interactions using real-time data streams and data integration techniques.

20. The non-transitory tangible computer-readable device of claim 15, wherein the instructions cause the AI Learner to:
employ deep learning models such as recurrent neural networks (RNNs) and long short-term memory (LSTM) networks to analyze interaction data and user feedback.
